# EUROPEAN PATENT APPLICATION

(11) **EP 4 770 043 A1**
(43) Date of publication of application: **01.07.2026**
(21) Application number: 25816070.4
(22) Date of filing: 22.05.2025
(51) Int. Cl.: H04L 49/9057, B60R 16/023, H04L 47/70, B60W 50/06

(54) **DATA MANAGEMENT DEVICE, VEHICLE INCLUDING SAME, AND METHOD**

(30) Priority: 29.05.2024 KR 20240070064
(71) Applicant: LG ENERGY SOLUTION, LTD., Seoul 07335 (KR)
(72) Inventor: YANG, Seong Yeol, Daejeon 34122 (KR); LEE, Ye Seul, Daejeon 34122 (KR); JUNG, Jae Sang, Daejeon 34122 (KR); KIM, Kyu Eun, Daejeon 34122 (KR)
(74) Representative: Plasseraud IP
(86) International application number: PCT/KR2025/006918
(87) International publication number: WO 2025/249828

(57) **Abstract**

According to an embodiment disclosed herein, a data management device may include a main control unit, an auxiliary control unit electrically connected to the main control unit, and an end device, and the auxiliary control unit may receive data from at least one of the main control unit, the end device, or any combination thereof, group the data based on a specified reference and generate at least one frame, and transmit the at least one frame to a target device identified based on the specified reference.

## Description

### TECHNICAL FIELD

### Cross-reference to Related Applications

This application claims priority from Korean Patent Application No. 10-2024-0070064, filed on May 29, 2024, the disclosure of which is incorporated by reference herein.

### Technical Field

Embodiments disclosed herein relate to a data management device and method, and a vehicle including the data management device.

### BACKGROUND ART

As electric vehicles powered by electricity become more widespread, research and development into new vehicle architectures is actively underway. For example, an electric vehicle may be powered by a secondary battery, where the secondary battery is a rechargeable battery, including conventional Ni/Cd batteries, Ni/MH batteries, or the like, and recent lithium-ion batteries. Among secondary batteries, the lithium-ion battery has the advantage of having a much higher energy density than the existing Ni/Cd battery, Ni/MH battery, and the like. In addition, since the lithium-ion battery may be manufactured to be small and lightweight, the lithium-ion battery is used as a power source for mobile devices, and in recent years, its scope of use has expanded to include power sources for electric vehicles, so that the lithium-ion battery attracts attention as a next-generation energy storage medium.

Such battery cells, battery modules, battery packs, or battery racks may be utilized in various devices. For example, batteries may be used in mobile devices such as mobile phones, laptop computers, smartphones, and smart pads, as well as in electric vehicles (EVs, hybrid electric vehicles (HEVs), plug-in HEVS (PHEVs)), large-capacity energy storage systems (ESSs), and the like.

The state and operation of these batteries may be managed and controlled by a battery management system (BMS). The BMS may be included with the batteries in a single device.

Meanwhile, as the automobile industry changes, the concept of future mobility such as software defined vehicles (SDVs), purpose-built vehicles (PBVs), and the like is gradually becoming more concrete. For example, the SDV is a type of vehicle that controls and manages hardware components using software. The software in accordance with the SDV may define not only a vehicle's driving performance but also its convenience features, safety features, emotional quality, and brand identity. By the architecture through the SDV, it may be possible to reduce vehicle development costs through ECU standardization and software internalization. In addition, autonomous driving technology may be advanced through high-performance computers and networks based on electronic architecture.

### DISCLOSURE OF THE INVENTION

### TECHNICAL PROBLEM

In a process of autonomous driving control being performed on a vehicle, managing and storing data related to autonomous driving is becoming increasingly important. In a vehicle including a software defined vehicle (SDV) architecture, a specific control unit (e.g., an auxiliary control unit or a zonal controller) may serve as a gateway or network switch to perform format conversion based on Signal-to-Data-Frame, or perform a response logic based on various data management methods under critical environments such as accident detection or the like.

The embodiments disclosed herein are directed to providing a data management device and method that uses a frame (or a jumbo frame) generated by performing grouping based on characteristics of data when transmitting and receiving (or routing) data between components (e.g., a high performance computer (HPC) (or a main control unit), a zonal controller (or an auxiliary control unit), and an end device) according to the SDV architecture in a vehicle including the SDV architecture, and a vehicle including the data management device.

The technical problems of the embodiments disclosed herein are not limited to those mentioned above, and other objectives not mentioned will be clearly understood by those skilled in the art from the following descriptions.

### TECHNICAL SOLUTION

According to an embodiment disclosed herein, there is provided a data management device including a main control unit, an auxiliary control unit electrically connected to the main control unit, and an end device.

According to an embodiment, the data management device may be configured to receive data from at least one of the main control unit, the end device, or any combination thereof, group the data based on a specified reference and generate at least one frame, and transmit the at least one frame to a target device identified based on the specified reference.

According to an embodiment, the auxiliary control unit may be configured to aggregate the data received during a first time and group the data based on at least one of a type of the data, a destination, a domain, or any combination thereof.

According to an embodiment, the auxiliary control unit may be configured to group the data and generate a target jumbo frame to be transmitted to the target device, identify a control period of the target device, and transmit the target jumbo frame to the target device when the first time reaches the control period.

According to an embodiment, the auxiliary control unit may include a plurality of zonal controllers.

According to an embodiment, the auxiliary control unit may be configured to transmit the data to a second zonal controller corresponding to a characteristic of the data when a first zonal controller among the plurality of zonal controllers receives the data.

According to an embodiment, the first zonal controller may be configured to receive the data from at least one of the main control unit, the end device, or any combination thereof, based on a first communication speed and transmit the data to the second zonal controller based on a second communication speed higher than the first communication speed.

According to an embodiment, the target device may correspond to one of a plurality of high performance computers (HPCs) included in the main control unit.

According to an embodiment disclosed herein, a vehicle including the data management device of the embodiments described above is provided.

According to an embodiment disclosed herein, a data management device includes receiving, by an auxiliary control unit, data from at least one of a main control unit, an end device, or any combination thereof, grouping, by the auxiliary control unit, the data based on a specified reference and generating at least one frame, and transmitting, by the auxiliary control unit, the at least one frame to a target device identified based on the specified reference.

According to an embodiment, the data management method may further include aggregating, by the auxiliary control unit, the data received during a first time and grouping the data based on at least one of a type of the data, a destination, a domain, or any combination thereof.

According to an embodiment, the data management method may further include grouping, by the auxiliary control unit, the data and generating a target jumbo frame to be transmitted to the target device, identifying, by the auxiliary control unit, a control period of the target device, and transmitting, by the auxiliary control unit, the target jumbo frame to the target device when the first time reaches the control period.

According to an embodiment, the data management method may further include transmitting, by the auxiliary control unit, the data to a second zonal controller corresponding to a characteristic of the data when a first zonal controller among a plurality of zonal controllers included in the auxiliary control unit receives the data.

According to an embodiment, the data management method may further include receiving, by the first zonal controller, the data from at least one of the main control unit, the end device, or any combination thereof, based on a first communication speed and transmitting, by the first zonal controller, the data to the second zonal controller based on a second communication speed higher than the first communication speed.

According to an embodiment, the data management method may further include processing, by the target device, the at least one frame by dividing the frame into service units.

According to embodiments disclosed herein, an auxiliary control unit for controlling a data management device includes a memory configured to store at least one instruction and a processor operatively connected to the memory.

According to an embodiment, the at least one instruction, when executed by the processor, may cause the auxiliary control unit to receive data from at least one of a main control unit, an end device, or any combination thereof, group the data based on a specified reference and generate at least one frame, and transmit the at least one frame to a target device identified based on the specified reference.

According to an embodiment, the at least one instruction, when executed by the processor, may cause the auxiliary control unit to aggregate the data received during a first time and group the data based on at least one of a type of the data, a destination, a domain, or any combination thereof.

According to an embodiment, the at least one instruction, when executed by the processor, may cause the auxiliary control unit to aggregate the data received during a first time and group the data based on at least one of a type of the data, a destination, a domain, or any combination thereof.

According to an embodiment, the at least one instruction, when executed by the processor, may cause the auxiliary control unit to group the data and generate a target jumbo frame to be transmitted to the target device, identify a control period of the target device, and transmit the target jumbo frame to the target device when the first time reaches the control period.

According to an embodiment, the auxiliary control unit may further include a plurality of zonal controllers. For example, the at least one instruction, when executed by the processor, may cause the auxiliary control unit to transmit the data to a second zonal controller corresponding to a characteristic of the data when a first zonal controller among the plurality of zonal controllers receives the data.

According to an embodiment, the at least one instruction, when executed by the processor, may cause the auxiliary control unit to receive the data from at least one of the main control unit, the end device, or any combination thereof, based on a first communication speed through the first zonal controller and transmit the data from the first zonal controller to the second zonal controller based on a second communication speed higher than the first communication speed.

### ADVANTAGEOUS EFFECTS

A data management device and method according to the embodiments disclosed herein can provide a data management method for vehicles capable of lowering a network load occurring during a data transmission and reception process and reducing a delay during a communication process, by performing grouping based on characteristics of data to enable efficient communication as the amount of data to be transmitted and received between components increases under a software defined vehicle (SDV) architecture.

Besides, various effects may be provided that are directly or indirectly identified through the present disclosure.

### BRIEF DESCRIPTION OF THE DRAWINGS

FIG. 1 is a conceptual diagram illustrating a structure of a vehicle including a data management device according to an embodiment disclosed herein.
FIG. 2 is a conceptual diagram illustrating a structure of a vehicle including a data management device according to an embodiment disclosed herein.
FIG. 3 is a block diagram illustrating a configuration of a data management device according to an embodiment disclosed herein.
FIG. 4 is a block diagram illustrating a configuration of an auxiliary control unit according to an embodiment disclosed herein.
FIG. 5 is a conceptual diagram illustrating a configuration of a data management device according to an embodiment disclosed herein.
FIG. 6 is a conceptual diagram illustrating a configuration of a data management device according to an embodiment disclosed herein.
FIG. 7 is a conceptual diagram illustrating a method of transmitting data by a data management device according to an embodiment disclosed herein.
FIG. 8 is a flowchart of a data management method according to an embodiment disclosed herein.
FIG. 9 is a flowchart of a data management method according to an embodiment disclosed herein.
FIG. 10 is a flowchart of a data management method according to an embodiment disclosed herein.
FIG. 11 is a block diagram showing a hardware configuration of a computing system for performing a method of operating a data management device according to an embodiment disclosed herein.

### MODE FOR CARRYING OUT THE INVENTION

Hereinafter, various embodiments disclosed in the present invention will be described with reference to the accompanying drawings. However, this is not intended to limit the present invention to the specific embodiments, and it is to be construed to include various modifications, equivalents, and/or alternatives of embodiments of the present invention.

Herein, it is to be understood that a singular form of a noun corresponding to an item may include one or more of the things, unless the relevant context clearly indicates otherwise. As used herein, each of phrases such as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. Terms such as "1st" and "2nd," or "first" and "second" may be used to simply distinguish a corresponding component from another, and do not limit the components in other aspects (e.g., importance or order). It is to be understood that if an element (e.g., a first element) is referred to, with or without the term "operatively" or "communicatively," as "coupled with," "coupled to," "connected with," or "connected to" another element (e.g., a second element), it means that the element may be coupled with the other element directly (e.g., wiredly), wirelessly, or via a third element.

Each of the components described herein (e.g., a module or program) may contain a single entity or a plurality of entities. According to various embodiments, one or more of the components may be omitted, or one or more other components may be added. Alternatively or additionally, a plurality of components (e.g., modules or programs) may be integrated into a single component. In such a case, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

As used herein, the term "module" or "unit" may include a unit implemented in hardware, software, or firmware, and may interchangeably be used with other terms, such as "logic," "logic block," "part," or "circuitry." A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., a program) or an application including one or more instructions that are stored in a storage medium (e.g., a memory) that is readable by a machine. For example, a processor of the machine may invoke at least one of the one or more instructions stored in the storage medium, and execute it. This allows the machine to be operated to perform at least one function according to the at least one instruction invoked. The one or more instructions may include a code generated by a compiler or a code executable by an interpreter. The machine-readable storage medium may be provided in the form of a non-transitory storage medium. Here, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

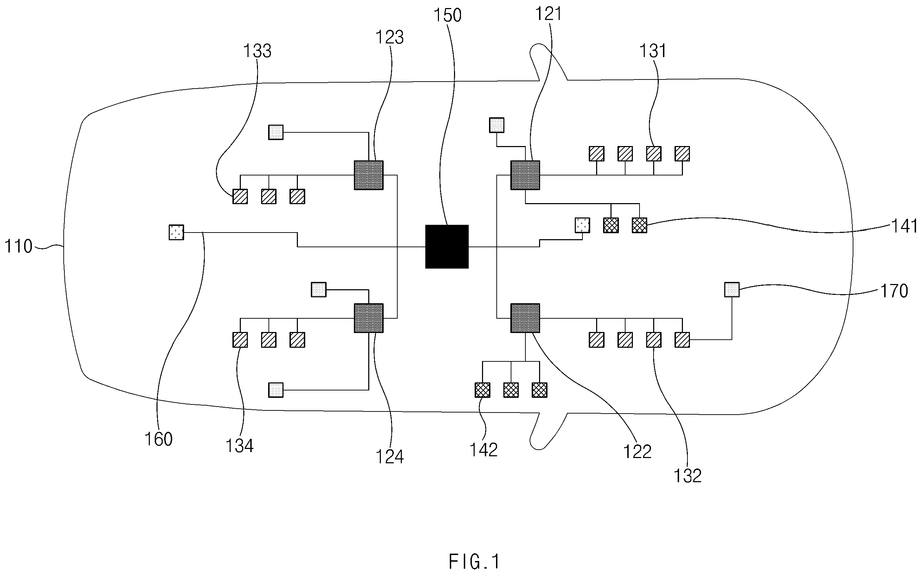

FIG. 1 is a conceptual diagram illustrating a structure of a vehicle including a data management device according to an embodiment disclosed herein.

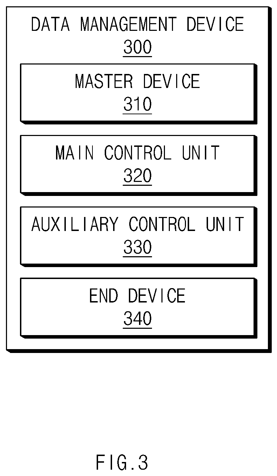

According to an embodiment, a data management device (e.g., a data management device 300 in FIG. 3) may include at least some of the components included in a vehicle 110 according to a software defined vehicle (SDV) architecture. The data management device may, for example, manage power and/or data transmitted and received between components of the vehicle 110.

For example, the vehicle 110 may include at least one of a first zonal controller 121, a second zonal controller 122, a third zonal controller 123, a fourth zonal controller 124, a first end device 131, a second end device 132, a third end device 133, a fourth end device 134, a first actuator 141, a second actuator 142, a high performance computer (HPC) 150, a transmission/reception path 160, an additional element 170, or any combination thereof. The data management device for managing data of the vehicle 110 may include at least some of the components included in the vehicle 110.

For example, components in accordance with the SDV architecture may include a hierarchical structure of the HPC 150, the zonal controller, and the end device in this order.

For example, the HPC 150 may be connected to the first zonal controller 121, the second zonal controller 122, the third zonal controller 123, and the fourth zonal controller 124, and may transmit and receive various types of data to and from each zonal controller.

For example, the first zonal controller 121, the second zonal controller 122, the third zonal controller 123, and the fourth zonal controller 124 may control the first end device 131, the second end device 132, the third end device 133, and the fourth end device 134, respectively. The end device may include, for example, at least one of a sensor for controlling the vehicle 110, a battery (or a BMS) for driving the vehicle 110, or any combination thereof. For example, when one of the second end devices 132 is a BMS, the additional element 170 may be defined as a battery pack.

For example, the first zonal controller 121 and the second zonal controller 122 may control the first actuator 141 and the second actuator 142, respectively. The actuator may include, for example, at least one driving device for driving the vehicle 110.

For example, the components described above may perform communication based on a specified path (e.g., the transmission/reception path 160) via automotive Ethernet.

The data management device according to an embodiment disclosed herein may control and manage a communication process for power and/or data transmitted and received between the above-described components.

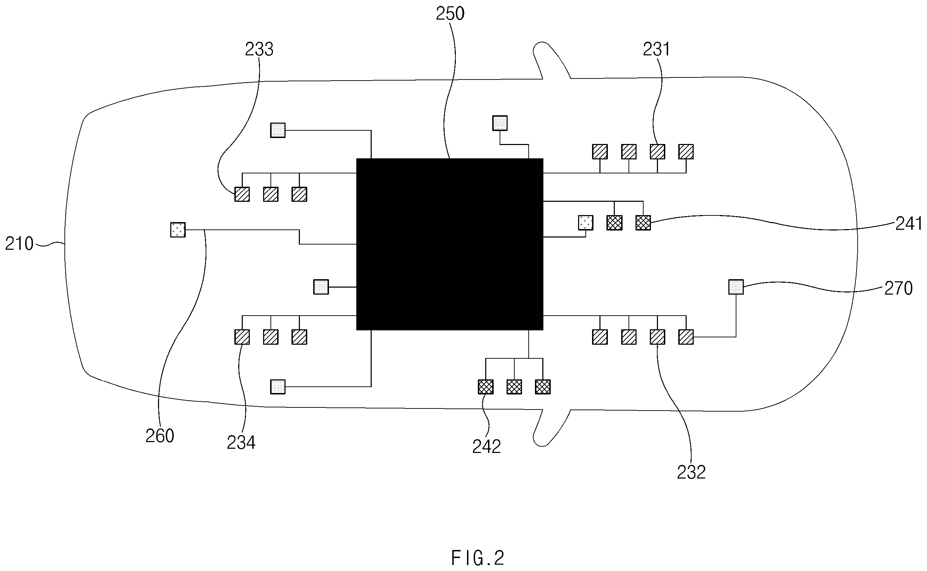

FIG. 2 is a conceptual diagram illustrating a structure of a vehicle including a data management device according to an embodiment disclosed herein.

In FIG. 2, the description of components defined with the same names as in FIG. 1 may be replaced with the description of FIG. 1 described above.

For example, a host vehicle 210 may include at least one of a first end device 231, a second end device 232, a third end device 233, a fourth end device 234, a first actuator 241, a second actuator 242, a high performance computer (HPC) 250, a transmission/reception path 260, an additional element 270, or any combination thereof. A data management device for managing data of the host vehicle 210 may include at least some of the components included in the host vehicle 210.

For example, the host vehicle 210 according to FIG. 2 does not include a zonal controller as compared to FIG. 1. That is, even when the SDV architecture is employed, the host vehicle 210 may be implemented in a structure in which the HPC 250 directly controls at least one end device, as illustrated in FIG. 2.

FIG. 3 is a block diagram illustrating a configuration of a data management device according to an embodiment disclosed herein.

Referring to FIG. 3, a data management device 300 may include a master device 310, a main control unit 320, an auxiliary control unit 330, and/or an end device 340.

According to an embodiment, the data management device 300 may perform power and/or data management between components for controlling the host vehicle. For example, the host vehicle may be operated by components in accordance with the SDV architecture. For example, an SDV may include a hierarchical structure of HPC (high performance computer), Zone, End device, and Sensor/Actuator. In this case, a vehicle according to SDV may be divided into a plurality of zones, and each zone may include a controller (e.g., a zonal controller) for controlling components of a lower layer included in the zone. The controller of the zone may be electrically connected to the HPC, and may transmit and receive various signals. The above-described contents are exemplary, and the embodiments of the present invention are not limited thereto. For example, according to another embodiment based on the SDV architecture (e.g., the embodiment of the SDV architecture illustrated in FIG. 2), the HPC and the end device are operatively connected, and the zone may be omitted. For example, the auxiliary control unit 330 may include a zonal controller corresponding to each of a plurality of zones within the host vehicle (e.g., a front zone, a rear zone, la eft zone, a right zone).

The data management device 300 may transmit and receive at least one of power, data (e.g., a wake-up packet), a control signal, or any combination thereof to components included in an electronic device. In an embodiment, the electronic device may be a mobile device (e.g., a mobile phone, a laptop computer, a smartphone, or a smart pad), an electric vehicle (e.g., an electric vehicle (EV), a hybrid EV (HEV), a plug-in HEV (PHEV), a fuel cell EV (FCEV)), an energy storage system (ESS), or a battery swapping system (BSS). In an embodiment, the electronic device may include a vehicle (e.g., an electric vehicle, a hybrid vehicle, etc.) and a mobile device that is powered by electrical energy. In other words, for example, the data management device 300 may be included in a vehicle, and may be configured to manage data for operation of the vehicle (e.g., operation for autonomous driving control).

The operation of the data management device 300 below may be performed by a battery management system (BMS) within the vehicle or a battery BMS provided within the battery pack, and may also be performed in various devices such as a server, a cloud, a charger, or a charger/discharger.

According to an embodiment, the master device 310 may be electrically connected to the main control unit 320, the auxiliary control unit 330, and/or the end device 340 to transmit, receive, and manage various types of data.

For example, the master device 310 may be a first control device included in the main control unit 320 or the auxiliary control unit 330, or may correspond to a second control device separate from the main control unit 320 and the auxiliary control unit 330.

For example, the master device 310 may be one of the a plurality of HPCs included in the main control unit 320 and a plurality of zonal controllers included in the auxiliary control unit 330.

For example, the master device 310 may be a separate control device (e.g., an HPC or a controller) that is physically and logically separated from the main control unit 320 and the auxiliary control unit 330.

For example, although the master device 310 is illustrated as a single unit, the data management device 300 may further include at least one additional master device.

For example, the master device 310 may generate and update network policies and control commands regarding communication protocols such as data generation, transmission and reception, processing, deletion, storage, and the like, within the data management device 300.

For example, the master device 310 may transmit a control signal including at least one of a network policy regarding a communication protocol, a control command, or any combination thereof to the main control unit 320 and/or the auxiliary control unit 330. The control signal may include information about at least one of, for example, a type of data frame, a priority according to the type, a destination, a source, a transmission method, a transmission path, or any combination thereof. The main control unit 320 and/or the auxiliary control unit 330 may, for example, generate data based on the control signal received from the master device 310 and transmit the data to another device.

For example, the master device 310 may update at least one of the network policy, the control command, or any combination thereof based on at least one of a network state between the main control unit 320 and the auxiliary control unit 330, an administrator command received from the outside, or any combination thereof. The master device 310 may retransmit a control signal containing update contents to the auxiliary control unit 330 based on a specific period.

According to an embodiment, the master device 310 may determine a network policy and/or control command based on the operating state of the host vehicle including the data management device 300 and transmit the network policy and/or control command to other devices.

For example, when the host vehicle is operating in a normal state (e.g., a stopped state, a driving state, or the like), the master device 310 may transmit a predefined network policy and/or control command to another device.

For example, the master device 310 may transmit a predefined network policy that includes a method (or a protocol) for transmitting battery information (e.g., cell data) to the end device 340 related to the battery (e.g., the BMS). When the host vehicle is In a normal state, the end device 340 may continuously update and renew battery information based on the predefined network policy. If the end device 340 fails to transmit first battery information to another device at a first point in time, second battery information may be transmitted at a second point in time, which is a next transmission cycle, without retransmitting the first battery information. The first battery information may be battery information updated at the first point in time, and the second battery information may be battery information updated at the second point in time. In other words, when the host vehicle is in a normal state, the master device 310 may determine the network policy so that, when the end device 340 fails to transmit battery information to another device at a certain point in time while updating battery information in real time, the corresponding information is not transmitted again and updated real-time battery information is transmitted at a transmission point in time of the next transmission cycle. In this way, when the host vehicle is in a normal state, an unnecessary retransmission operation is not performed after data transmission fails, but instead only information that is updated may be transmitted in real time at the next transmission point in time, thereby implementing an efficient communication protocol.

For example, when the host vehicle is operating in a diagnostic state (or an inspection state), the master device 310 may transmit a network policy and/or control command for data transmission and reception to an end device 340 regarding a component under diagnosis.

For example, when the host vehicle is operating in a diagnostic state for the battery, the master device 310 may transmit a network policy and/or control command for transmitting and receiving battery diagnosis related data (e.g., cell data) to a specific end device (e.g., a BMS) regarding the battery among the end devices 340.

For example, a particular end device may store battery diagnosis related data permanently or for an extended period relative to other data, based on receiving the network policy and/or control commands. In this case, unlike in the normal state of the host vehicle, the end device may store all diagnosis data generated during the diagnostic process and transmit all stored diagnosis data to another device. A specific end device may, for example, identify a specific HPC regarding a diagnosis state among a plurality of HPCs included in the main control unit 320 and directly transmit battery diagnostic-related data to a specific zonal controller corresponding to the specific HPC among a plurality of zonal controllers included in the auxiliary control unit 330. This transmitting process may be a logical transmission process that includes routing. A particular end device may continuously transmit battery diagnosis related data at a specified cycle without deleting the battery diagnosis related data until an acknowledgement (ACK) signal indicating that the battery diagnosis related data has been received from, for example, a specific HPC and/or a specific zonal controller, is received.

For example, when a failure occurs in the host vehicle or an accident involving the host vehicle occurs, the master device 310 may generate a network policy and/or control command to instruct other devices to increase the priority of data transmission and reception operations generated from the device(s) (e.g., the auxiliary control unit 330 and/or the end device 340) involved in the failure and/or accident, and transmit the policy or command to other devices.

For example, when a failure and/or accident is detected in a specific zone among a plurality of zones of the host vehicle, the master device 310 may generate a network policy and/or control command to instruct at least one device included in the data management device 300 to increase the priority of transmission and reception operations of data generated in the specific zone (or data generated from the zonal controller and/or the end device 340 corresponding to the specific zone) and transmit the network policy and/or control command to the at least one device.

For example, when an accident or warning situation occurs in the host vehicle, the master device 310 may specify data corresponding to the situation in a specified format (e.g., permanent form or event format) and transmit the data to other devices. For example, when the first zonal controller included in the auxiliary control unit 330 and communicating with the first HPC receives the above-described data in the specified format, the first zonal controller may transmit the above-described data in the specified format to at least one other HPC other than the first HPC. At least one HPC may be an HPC included, for example, in a zone other than a first zone including the first zonal controller, among the plurality of zones of the host vehicle.

For example, the zonal controller and/or the end device 340 corresponding to (or included in) a specific zone may perform control such that data related to the failure and/or accident in the specific zone is promptly and reliably transmitted to other devices handling the failure and/or accident, by enhancing the transmission speed, quality, stability, and the like of the corresponding data, based on receiving the network policy and/or control command.

According to an embodiment, the main control unit 320 may include a plurality of HPCs.

For example, the main control unit 320 may perform operations such as generation, transmission/reception, processing, deletion, and storage of data based on the control signal received from the master device 310.

For example, the main control unit 320 may receive a data frame from the auxiliary control unit 330.

According to an embodiment, the auxiliary control unit 330 may perform operations such as generation, transmission/reception, processing, deletion, and storage of data based on the control signal received from the master device 310, and may adjust operation weights for each of a plurality of functions that the auxiliary control unit 330 may perform.

For example, the auxiliary control unit 330 may generate the data frame based on the control signal.

For example, the auxiliary control unit 330 may determine a transmission method and a transmission path of the data frame based on the control signal, and then transmit the data frame to the main control unit 320 corresponding to the data frame.

For example, the auxiliary control unit 330 may identify a specified HPC (or a target device) corresponding to the data frame based on the control signal, among the plurality of HPCs included in the main control unit 320.

For example, the auxiliary control unit 330 may identify a control period of the specified HPC and then continue to aggregate the data frame during the identified control period.

For example, the auxiliary control unit 330 may transmit the aggregated data frame to the specified HPC based on the control period. In other words, the auxiliary control unit 330 may aggregate the data frame during the control period and transmit the aggregated data frame (or jumbo frame) to the specified HPC.

For example, the specified HPC (or target device) may process the data frame (or at least one frame) received from the auxiliary control unit 330 by dividing the data fame into service units. The target device may, for example, process items of data included in at least one frame by dividing the items of data into a first service related to a battery pack, a second service related to a sensor, a third service related to multimedia, and the like. In this case, the target device may correspond to one of the plurality of HPCs included in the main control unit 320.

For example, the auxiliary control unit 330 may adjust an operation weight of each of a plurality of functions including at least one of end device control, network communication, protection, monitoring, or any combination thereof, based on the control signal. By adjusting the operation weight, the auxiliary control unit 330 may change the priority, processing time, load, processing amount, and the like of each of the plurality of functions.

According to an embodiment, the end device 340 may be electrically connected to the auxiliary control unit 330, the main control unit 320, and/or the master device 310.

For example, the end device 340 may include a plurality of control devices for controlling components of the host vehicle (e.g., sensors, cameras, battery packs, actuators, and the like).

For example, the end device 340 may be a BMS including a battery pack, but this is exemplary and the embodiments disclosed herein are not limited thereto.

For example, the end device 340 may receive a control signal from the master device 310. The end device 340 may, for example, generate a battery pack data frame for controlling the battery pack based on the control signal and control the battery pack based on the battery pack data frame.

For example, the end device 340 may perform operations such as controlling the operating time, operating intensity, temperature and/or pressure of the battery pack, controlling TP, and the like, based on the battery pack data frame.

For example, the end device 340 may transmit a control process of the battery pack, a control result, information about the battery pack, and the like based on the battery pack data frame to the auxiliary control unit 330, the main control unit 320, and/or the master device 310.

For example, the end device 340 may identify a specified zonal controller corresponding to the battery pack data frame among the plurality of zonal controllers included in the auxiliary control unit 330 based on the control signal. The specified zonal controller may be, for example, a zonal controller installed in a zone that includes the battery pack.

For example, the end device 340 may aggregate the battery pack data frame during a control period of the specified zonal controller and transmit the aggregated battery pack data frame (or the battery pack jumbo frame) to the specified zonal controller based on the control period.

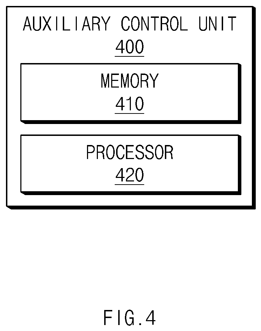

FIG. 4 is a block diagram illustrating a configuration of an auxiliary control unit according to an embodiment disclosed herein.

According to an embodiment, a data management device (e.g., the data management device 300 in FIG. 3) may include an auxiliary control unit 400 (e.g., the auxiliary control unit 330 in FIG. 3).

According to an embodiment, the auxiliary control unit 400 may include a memory 410 and a processor 420. The configuration of the auxiliary control unit 400 illustrated in FIG. 4 is exemplary, and embodiments of the present invention are not limited thereto. For example, the auxiliary control unit 400 may further include components not illustrated in FIG. 4 (e.g., at least one of a communication unit, a display unit, a notification unit, a plurality of zonal controllers, or any combination thereof).

According to an embodiment, the memory 410 may store commands or data. For example, the memory 410 may store one or more instructions that, when executed by the processor 420, cause the auxiliary control unit 400 to perform various operations.

For example, the memory 130 may be implemented together with the processor 120 in a single chipset. The processor 420 may include at least one of a communication processor or a modem.

For example, the memory 410 may store various types of information related to the data management device (or the battery pack). For example, the memory 410 may store information about an operation history of the processor 420. For example, the memory 410 may store information related to the state and/or operation of the components of the auxiliary control unit 400 (or the battery pack).

For example, the memory 410 may include a plurality of storage devices of different types. For example, the memory 410 may include at least one of a random-access memory (RAM), an Embedded Multi-Media Card (eMMC), or any combination thereof.

According to an embodiment, the processor 420 may be operatively connected to the memory 410. For example, the processor 420 may control the operation of the memory 410.

For example, the processor 420 may be implemented as any one of a micro controller unit (MCU), a domain controller unit (DCU), or a zone control unit (ZCU).

For example, the processor 420 may receive a control signal including at least one of a network policy regarding a communication protocol, a control command, or any combination thereof from a master device (e.g., the master device 310 in FIG. 3).

For example, the control signal may include information about at least one of a type of data frame to be generated and managed by the auxiliary control unit 400, a priority according to the type, a destination, a source, a transmission method, a transmission path, or any combination thereof.

For example, the processor 420 may generate a data frame and determine a transmission method and a transmission path, based on the control signal, and then transmit the data frame to a main control unit (e.g., the main control unit 320 in FIG. 3) corresponding to the data frame.

For example, the processor 420 may identify a specified HPC corresponding to the data frame among a plurality of HPCs included in the main control unit based on the control signal, aggregate the data frame during a control period of the specified HPC, and transmit the aggregated data frame to the specified HPC based on the control period.

For example, the processor 420 may adjust an operation weight of each of a plurality of functions including at least one of end device control, network communication, protection, monitoring, or any combination thereof, based on the control signal.

For example, the processor 420 may receive various types of data from the main control unit and/or an end device (e.g., the end device 340 in FIG. 3). The processor 420 may, for example, group received data based on a specified reference and generate at least one frame (or jumbo frame), and transmit the generated at least one frame to a target device identified based on the specified reference.

For example, the target device may be at least one of the plurality of HPCs included in the main control unit, a plurality of zonal controllers included in the auxiliary control unit, the master device, or any combination thereof.

For example, the processor 420 may aggregate data received during a first time and group the data based on at least one of a type of data, a destination, a domain, or any combination thereof.

For example, the processor 420 may group data and generate a target jumbo frame to be transmitted to the target device. The target jumbo frame may, for example, include results of aggregating data generated about the target device during the first time.

For example, the processor 420 may identify a control period of the target device and transmit the target jumbo frame to the target device when the first time reaches the control period. Since the target device receives the aggregated target jumbo frame at once each control period, the network load on the data management device may be reduced, and data transmission and reception may be efficiently performed each control period without missing data.

For example, the auxiliary control unit 400 may include the plurality of zonal controllers. Each of the plurality of zonal controllers may include the processor 420.

For example, a first zonal controller may receive data from at least one of the main control unit, the end device, or any combination thereof. The first zonal controller may, for example, transmit data to a second zonal controller corresponding to a characteristic of the received data.

For example, the first zonal controller may receive data from at least one of the main control unit, the end device, or any combination thereof based on a first communication speed (e.g., 1 Gbps).

For example, the first zonal controller may transmit data to the second zonal controller based on a second communication speed (e.g., 10 Gbps). The second communication speed may be higher than the first communication speed.

In other words, the auxiliary control unit 400 may operate based on a relatively high communication speed when performing internal communication than when performing external communication.

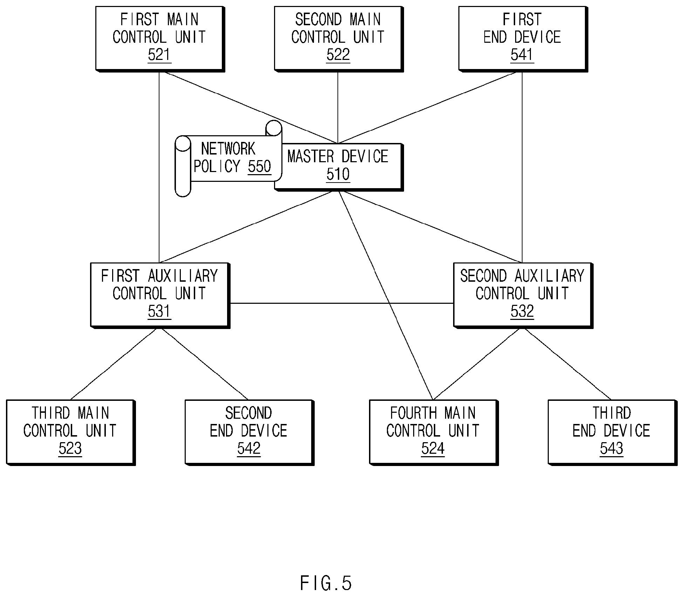

FIG. 5 is a conceptual diagram illustrating a configuration of a data management device according to an embodiment disclosed herein.

According to an embodiment, a data management device (e.g., the data management device 300 in FIG. 3) may include a master device 510 (e.g., the master device 310 in FIG. 3), a plurality of main control units 521, 522, 523, and 524, a plurality of auxiliary control units 531 and 532, and a plurality of end devices 541, 542, and 543.

According to FIG. 5, the master device 510 may control operations of data generation, transmission/reception, processing, deletion, management, and the like of other components through a network policy 550. The network policy 550 may be updated and then transmitted, for example, based on a specified period. The network policy 550 may be updated based on at least one of, for example, a network state between components, an administrator command received from the outside, or any combination thereof. The network policy 500 may include information about at least one of, for example, a type of data frame, a priority according to the type, a destination, a source, a transmission method, a transmission path, or any combination thereof.

For example, the master device 510 may generate a plurality of network policies. The master device 510 may generate a first policy and a second policy, and selectively transmit the generated policies based on the characteristic of each component of the data management device (e.g., the control target, the performance, the storage capacity, or the like). The master device 510 may, for example, transmit, to one component only one policy, or a plurality of policies together.

For example, a first main control unit 521, a second main control unit 522, a first end device 541, a first auxiliary control unit 531, and a second auxiliary control unit 532 may receive the network policy 550 from the master device 510 based on a specified period. Other components not described above may manage data without being based on the network policy 550, but this is merely exemplary and other components may also receive network policy 550 and manage data.

For example, components that have received the network policy 550 may generate a data frame based on the information included in the network policy 550 and identify the priority, destination, transmission method, and transmission path (e.g., routing) of the generated data frame.

For example, the master device 510 may be one of the plurality of main control units, the plurality of auxiliary control units, and the plurality of end devices included in the data management device.

For example, the master device 510 may be a separate device physically and logically separated from the plurality of main control units, the plurality of auxiliary control units, and the plurality of end devices included in the data management device.

For example, a first auxiliary control unit 531 and/or a second auxiliary control unit 532 may adjust a weight for each of a plurality of performable functions based on the network policy (and/or the control command) received from the master device 510. For example, the first auxiliary control unit 531 and/or the second auxiliary control unit 532 may adjust an operation weight of each of a plurality of functions including at least one of end device control, network communication, protection, monitoring, or any combination thereof, based on the network policy (and/or the control command).

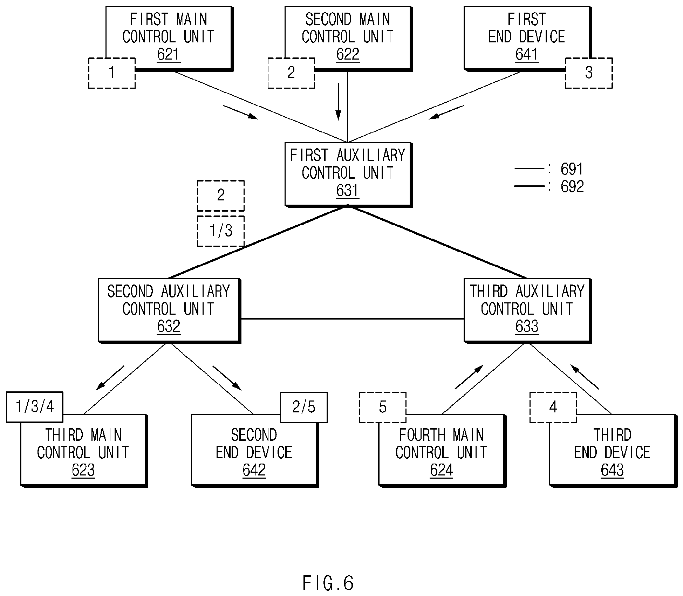

FIG. 6 is a conceptual diagram illustrating a configuration of a data management device according to an embodiment disclosed herein.

According to an embodiment, a data management device (e.g., the data management device 300 in FIG. 3) may include a plurality of main control units 621, 622, 623, and 624, a plurality of auxiliary control units 631, 632, and 633, and a plurality of end devices 641, 642, and 643.

For example, a first auxiliary control unit 631 (or a first zonal controller), a second auxiliary control unit 632 (or a second zonal controller), and a third auxiliary control unit 633 (or a third zonal controller) may be implemented as a single auxiliary control unit (e.g., the auxiliary control unit 330 in FIG. 3). Hereinafter, the following description assumes that the three auxiliary control units illustrated in FIG. 6 are implemented as a single chip.

For example, the auxiliary control unit (or the first auxiliary control unit 631) may receive data 1 from a first main control unit 621.

For example, the auxiliary control unit (or the first auxiliary control unit 631) may receive data 2 from a second main control unit 622.

For example, the auxiliary control unit (or the first auxiliary control unit 631) may receive data 3 from a first end device 641.

For example, the auxiliary control unit (or the third auxiliary control unit 633) may receive data 4 from a third end device 643.

For example, the auxiliary control unit (or the third auxiliary control unit 633) may receive data 5 from a fourth main control unit 644.

For example, the auxiliary control unit may receive the data 1 to data 5 based on a first communication protocol 591. The first communication protocol 591 may be used, for example, based on a first communication speed (e.g., 1 Gbps).

According to an embodiment, the auxiliary control unit may group the received data 1 to 5 based on a specified reference and generate at least one frame.

For example, the auxiliary control unit may aggregate data received during a first time and group the data based on at least one of a type of data, a destination, a domain, or any combination thereof.

For example, the auxiliary control unit may group the data 1 and 3 and generate one frame, and group the data 2 and generate one frame.

For example, the auxiliary control unit may identify a target device corresponding to at least one grouped frame based on the specified reference. According to FIG. 6, the auxiliary control unit may identify that the target device corresponding to the data 1, data 3, and data 4 is a third main control unit 623, and that the target device corresponding to the data 2 and data 5 is a second end device 642. The auxiliary control unit may generate a target jumbo frame including the data 1, data 3, and data 4 to be transmitted to the third main control unit 623 using the second auxiliary control unit 632.

For example, the auxiliary control unit may group data based on at least one of the type of data, the destination, the domain, or any combination thereof.

According to an embodiment, the auxiliary control unit may identify a zonal controller to which data is to be transmitted based on the characteristic of the received data, and transmit the data to the identified zonal controller.

For example, the auxiliary control unit may identify the second auxiliary control unit 632 corresponding to the data 1, data 2, and data 3 based on the characteristic of each of the data 1, data 2, and data 3 received through the first auxiliary control unit 631. Then, the auxiliary control unit may transmit the data 1, data 2, and data 3 transmitted to the first auxiliary control unit 631 to the second auxiliary control unit 632.

For example, the auxiliary control unit may identify the second auxiliary control unit 632 corresponding to the data 4 and data 5 based on the characteristic of each of the data 4 and data 5 received through the third auxiliary control unit 633. Then, the auxiliary control unit may transmit, to the second auxiliary control unit 632, the data 4 and data 5 transmitted to the third auxiliary control unit 633.

For example, the first auxiliary control unit 631 and the third auxiliary control unit 633 may transmit data to the second auxiliary control unit 632 based on a second communication protocol 592. The second communication protocol 592 may be used, for example, based on a second communication speed (e.g., 10 Gbps) that is higher than the first communication speed.

For example, the auxiliary control unit (or the second auxiliary control unit 632) may generate a first target jumbo frame to be transmitted to the third main control unit 623, which is a target device, by adding the data 4 to a frame formed by grouping the data 1 and data 3.

For example, the auxiliary control unit (or the second auxiliary control unit 632) may generate a second target jumbo frame to be transmitted to the second end device 642, which is a target device, by aggregating the data 2 and data.

For example, the first target jumbo frame may include data aggregated during the first time corresponding to a control period of the third main control unit 623.

For example, the second target jumbo frame may include data aggregated during a second time corresponding to a control period of the second end device 642.

For example, the auxiliary control unit (or the second auxiliary control unit 632) may transmit, to the third main control unit 623, the first target jumbo frame generated by receiving, aggregating, and grouping data during the first time. In other words, the auxiliary control unit may aggregate data corresponding to the third main control unit 623 during the first time and transmit the first target jumbo frame corresponding to an aggregation result to the third main control unit 623 when the first time elapses.

For example, the auxiliary control unit (or the second auxiliary control unit 632) may transmit, to the second end device 642, the first target jumbo frame generated by receiving, aggregating, and grouping data during the second time. In other words, the auxiliary control unit may aggregate data corresponding to the second end device 642 during the second time and transmit the second target jumbo frame corresponding to an aggregation result to the second end device 642 when the second time elapses.

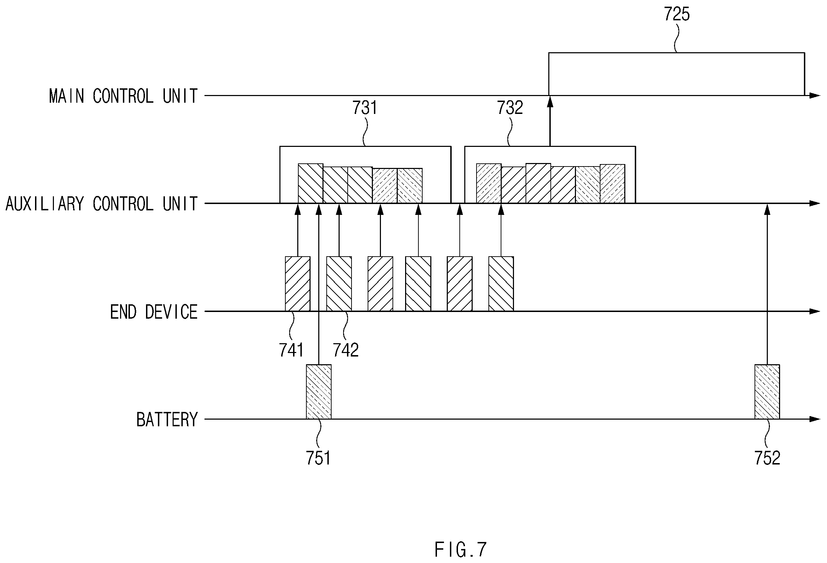

FIG. 7 is a conceptual diagram illustrating a method of transmitting data by a data management device according to an embodiment disclosed herein.

According to an embodiment, a data management device (e.g., the data management device 300 in FIG. 3) may include a battery, an end device (e.g., the end device 340 in FIG. 3), an auxiliary control unit (e.g., the auxiliary control unit 330 in FIG. 3), and a main control unit (e.g., the main control unit 320 in FIG. 3). The main control unit may include a plurality of HPCs, and the auxiliary control unit may include a plurality of zonal controllers.

According to an embodiment, the battery and the end device may also be implemented as a single integrated module (e.g., a BMS).

For example, the battery may transmit battery data periodically and/or upon request from the auxiliary control unit and the main control unit. The battery data may include, for example, information about the battery's state of charge, charge/discharge data, voltage, pressure, temperature, operating history, or any combination thereof.

For example, the battery may transmit first battery data 751 and second battery data 752 to the auxiliary control unit (e.g., the auxiliary control unit 330 in FIG. 3).

For example, the end device may transmit a plurality of pieces of first end data 741 and a plurality of pieces of second end data 742 to the auxiliary control unit.

For example, the auxiliary control unit may group the end data and generate at least one frame, based on characteristics of the received end data and/or a specified reference (e.g., a type of data, a destination, a source, a domain, and the like). At least one frame may be, for example, a jumbo frame, where the amount of data exceeds a specified value. The auxiliary control unit may also receive data from, for example, other end devices (e.g., end devices for controlling sensors and/or multimedia devices) not illustrated in FIG. 7.

For example, the auxiliary control unit may generate a first frame 731 and a second frame 732. The destination of the first frame 731 may be, for example, a main control unit other than the main control unit illustrated in FIG. 7.

For example, the auxiliary control unit may transmit the second frame 732 to the main control unit. The auxiliary control unit may, for example, aggregate data received from the end device, the battery, and/or the main control unit during a first time and transmit, to the main control unit, the second frame 732 generated by grouping the aggregated data based on the specified reference. The auxiliary control unit may, for example, transmit the generated second frame 732 to the main control unit when the first time (e.g., a control period of the main control unit) elapses from a point in time when generation of the second frame 732 begins (or when the first time reaches the control period of the main control unit).

For example, when the control period of another main control unit corresponding to the first frame 731 elapses from a point in time when generation of the first frame 731 begins, the auxiliary control unit may transmit the first frame 731 generated during the control period of the other main control unit to the other main control unit.

For example, the main control unit may process the second frame 732 by dividing the second frame 732 into service units. The main control unit may, for example, process items of data included in the second frame 732 by dividing the items of data into a first service related to the battery pack, a second service related to the sensor, and a third service related to multimedia.

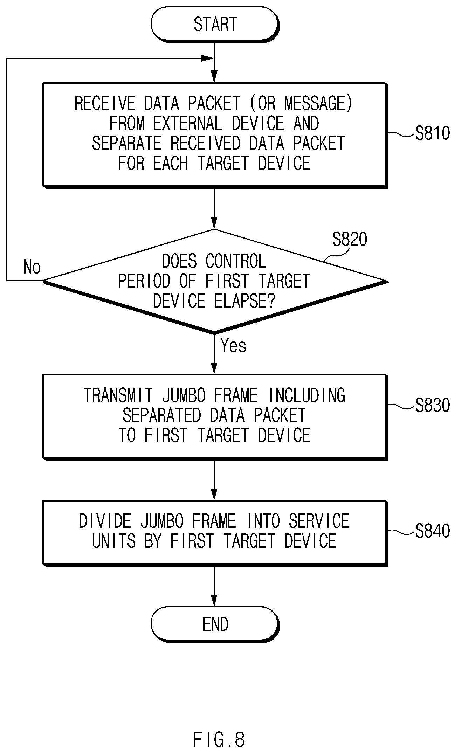

FIG. 8 is a flowchart of a data management method according to an embodiment disclosed herein.

According to the implementation, a data management device (e.g., the data management device 300 in FIG. 3) may perform operations disclosed in FIG. 8. For example, at least some of the components included in the data management device (e.g., the master device 310, the main control unit 320, the auxiliary control unit 330, and/or the end device 340 of FIG. 3) may be configured to perform the operations of FIG. 8.

In the following embodiment, operations S810 to S840 may be sequentially performed, but are not necessarily sequentially performed. For example, the order of the operations may be changed, and at least two operations may be performed in parallel. In addition, any content that corresponds to or overlaps with the content described above with reference to FIG. 8 may be briefly described or omitted.

Referring to FIG. 8, the data management method may include an operation S810 of receiving a data packet (or a message) from an external device and separating the received data packet for each target device, by a zonal controller, an operation S820 of determining whether a control period of a first target device elapses, an operation S830 of transmitting a jumbo frame including the separated data packet to the first target device, and an operation S840 of dividing the jumbo frame into service units by the first target device.

In operation S810, the zonal controller may receive data packets from at least some of other zonal controllers, HPCs, and end devices, and separately group the data packets based on destinations. The zonal controller may identify the destination of each jumbo frame generated as a result of grouping.

In operation S820, the zonal controller may identify a control period of the first target device (e.g., an HPC) among the plurality of destinations. If it is identified that a first time, which is a control period of the first target device, elapses from a point in time when grouping of data packets begins, the zonal controller may perform operation S830.

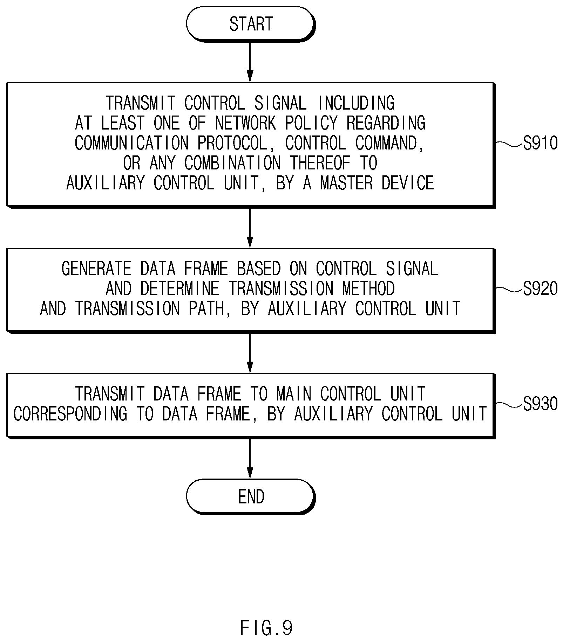

FIG. 9 is a flowchart of a data management method according to an embodiment disclosed herein.

According to the implementation, a data management device (e.g., the data management device 300 in FIG. 3) may perform operations disclosed in FIG. 9. For example, at least some of the components included in the data management device (e.g., the master device 310, the main control unit 320, the auxiliary control unit 330, and/or the end device 340 of FIG. 3) may be configured to perform the operations of FIG. 9.

In the following embodiment, operations S910 to S930 may be sequentially performed, but are not necessarily sequentially performed. For example, the order of the operations may be changed, and at least two operations may be performed in parallel. In addition, any content that corresponds to or overlaps with the content described above with reference to FIG. 9 may be briefly described or omitted.

Referring to FIG. 9, the data management method may include an operation S910 of transmitting a control signal including at least one of a network policy regarding a communication protocol, a control command, or any combination thereof to an auxiliary control unit, by a master device, an operation S920 of generating a data frame based on the control signal and determining a transmission method and a transmission path, by the auxiliary control unit, and an operation S930 of transmitting the data frame to a main control unit corresponding to the data frame, by the auxiliary control unit.

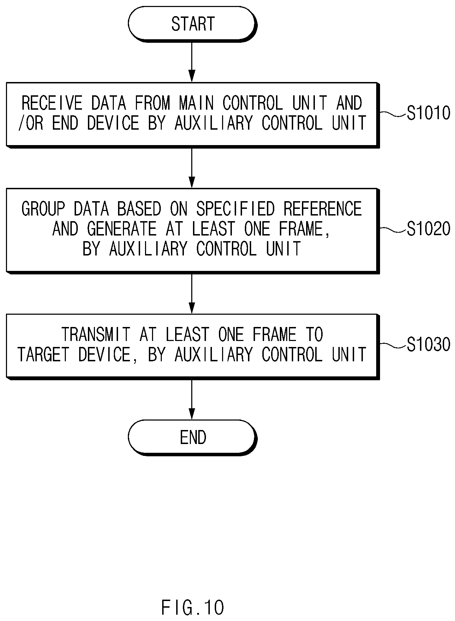

FIG. 10 is a flowchart of a data management method according to an embodiment disclosed herein.

According to the implementation, a data management device (e.g., the data management device 300 in FIG. 3) may perform operations disclosed in FIG. 9. For example, at least some of the components included in the data management device (e.g., the master device 310, the main control unit 320, the auxiliary control unit 330, and/or the end device 340 of FIG. 3) may be configured to perform the operations of FIG. 9.

In the following embodiment, operations S1010 to S1030 may be sequentially performed, but is not necessarily sequentially performed. For example, the order of the operations may be changed, and at least two operations may be performed in parallel. In addition, any content that corresponds to or overlaps with the content described above with respect to FIG. 10 may be briefly described or omitted.

Referring to FIG. 10, the data management method may include an operation S1010 of receiving data from a main control unit and/or an end device by an auxiliary control unit, an operation S1020 of grouping the data based on a specified reference and generating at least one frame, by the auxiliary control unit, and an operation S1030 of transmitting the at least one frame to a target device, by the auxiliary control unit.

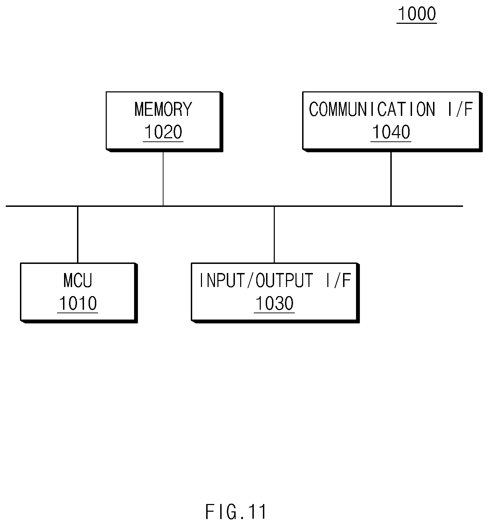

FIG. 11 is a block diagram showing a hardware configuration of a computing system for performing a method of operating a data management device according to an embodiment disclosed herein.

Referring to FIG. 11, a computing system 3000 according to an embodiment disclosed herein may include a microcontroller unit (MCU) 1010, a memory 1020, an input/output interface (I/F) 1030, and a communication I/F 1040.

The MCU 1010 may be a processor that executes various programs stored in the memory 1020, processes various types of information including data and the like of the battery through the programs, and performs functions of the processor (or the controller) included in the data management device shown in the aforementioned FIG. 3.

The memory 1020 may store various programs for performing the functions of the data management device. In addition, the memory 1020 may store various types of information including battery data (voltage data, capacity data, and the like), differential capacity data, and the like, and may include a constructed database.

A plurality of memories 1020 may be provided as needed. The memory 1020 may be a volatile memory or a non-volatile memory. As the volatile memory, the memory 1020 may be a random access memory (RAM), a dynamic RAM (DRAM), a static RAM (SRAM), or the like. For the memory 1020 as the non-volatile memory, a read-only memory (ROM), a programmable ROM (PROM), an electrically alterable ROM (EAROM), an erasable programmable ROM (EPROM), an electrically erasable programmable ROM (EEPROM,) a flash memory, or the like may be used. The examples of memories 1020 listed above are only exemplary and are not limited to the examples.

The input/output I/F 1030 may provide an interface that connects an input device (not shown) such as a keyboard, mouse, touch panel, or the like, and an output device such as a display (not shown), to the MCU 1010 to enable data transmission and reception.

The communication I/F 1040 is a component that may transmit and receive various types of data to and from the server, and may be any device that may support wired or wireless communication. For example, the data management device may transmit and receive various types of information, including battery data, to and from a separately provided external server or the like through the communication I/F 1040.

By being recorded in the memory 1020 and processed by the MCU 1010 in this way, a computer program according to an embodiment disclosed herein may be implemented, for example, as a module that performs each of the functions shown in FIG. 1.

Although all the components constituting the embodiments disclosed herein have been described as being combined or operating in combination as one, the embodiments disclosed herein are not necessarily limited to these embodiments. That is, within the scope of the purpose of the embodiments disclosed herein, all of the components may be selectively combined and operated one or more times.

Terms such as "include," "comprise," or "have" described above mean that the corresponding component may be present unless otherwise stated, and thus it should be construed that other components may be further included rather than excluding other components. All terms including technical or scientific terms have the same meaning as commonly understood by those of ordinary skill in the art to which embodiments disclosed herein belong, unless otherwise defined. Terms commonly used such as those defined in dictionaries should be interpreted as having a meaning that is consistent with their meaning in the context of the related art and will not be interpreted in an idealized or overly formal sense unless expressly so defined herein.

The above description is merely an example of the technical idea disclosed herein, and those with ordinary skill in the art to which the embodiments disclosed herein belong may make various modifications and variations without departing from the essential characteristics of the embodiments disclosed herein. Accordingly, the embodiments disclosed herein are not intended to limit the technical ideas of the embodiments disclosed herein but rather to explain them, and the scope of the technical ideas disclosed herein is not limited by these embodiments. The scope of protection disclosed herein should be interpreted by the accompanying claims, and all technical ideas within the scope equivalent thereto should be construed as being included in the scope of rights herein.

## Claims

1. A data management device comprising:
a main control unit;
an auxiliary control unit electrically connected to the main control unit; and
an end device,
wherein the auxiliary control unit is configured to:
receive data from at least one of the main control unit, the end device, or any combination thereof;
group the data based on a specified reference and generate at least one frame; and
transmit the at least one frame to a target device identified based on the specified reference.

2. The data management device of claim 1, wherein the auxiliary control unit is configured to aggregate the data received during a first time and group the data based on at least one of a type of the data, a destination, a domain, or any combination thereof.

3. The data management device of claim 2, wherein the auxiliary control unit is configured to:
group the data and generate a target jumbo frame to be transmitted to the target device;
identify a control period of the target device; and
transmit the target jumbo frame to the target device when the first time reaches the control period.

4. The data management device of claim 1, wherein the auxiliary control unit includes a plurality of zonal controllers, and
the auxiliary control unit is configured to transmit the data to a second zonal controller corresponding to a characteristic of the data when a first zonal controller among the plurality of zonal controllers receives the data.

5. The data management device of claim 4, wherein the first zonal controller is configured to:
receive the data from at least one of the main control unit, the end device, or any combination thereof, based on a first communication speed; and
transmit the data to the second zonal controller based on a second communication speed higher than the first communication speed.

6. The data management device of claim 1, wherein the target device is configured to process the at least one frame by dividing the frame into service units.

7. The data management device of claim 1, wherein the target device corresponds to one of a plurality of high performance computers (HPCs) included in the main control unit.

8. A vehicle comprising the data management device according to any one of claims 1 to 7.

9. A data management method comprising:
receiving, by an auxiliary control unit, data from at least one of a main control unit, an end device, or any combination thereof;
grouping, by the auxiliary control unit, the data based on a specified reference and generating at least one frame; and
transmitting, by the auxiliary control unit, the at least one frame to a target device identified based on the specified reference.

10. The data management method of claim 9, further comprising aggregating, by the auxiliary control unit, the data received during a first time and grouping the data based on at least one of a type of the data, a destination, a domain, or any combination thereof.

11. The data management method of claim 10, further comprising:
grouping, by the auxiliary control unit, the data and generating a target jumbo frame to be transmitted to the target device;
identifying, by the auxiliary control unit, a control period of the target device; and
transmitting, by the auxiliary control unit, the target jumbo frame to the target device when the first time reaches the control period.

12. The data management method of claim 9, further comprising transmitting, by the auxiliary control unit, the data to a second zonal controller corresponding to a characteristic of the data when a first zonal controller among a plurality of zonal controllers included in the auxiliary control unit receives the data.

13. The data management method of claim 12, further comprising:
receiving, by the first zonal controller, the data from at least one of the main control unit, the end device, or any combination thereof, based on a first communication speed; and
transmitting, by the first zonal controller, the data to the second zonal controller based on a second communication speed higher than the first communication speed.

14. The data management method of claim 9, further comprising processing, by the target device, the at least one frame by dividing the frame into service units.

15. An auxiliary control unit for controlling a data management device, comprising:
a memory configured to store at least one instruction; and
a processor operatively connected to the memory,
wherein the at least one instruction, when executed by the processor, causes the auxiliary control unit to:
receive data from at least one of a main control unit, an end device, or any combination thereof;
group the data based on a specified reference and generate at least one frame; and
transmit the at least one frame to a target device identified based on the specified reference.

16. The auxiliary control unit of claim 15, wherein the at least one instruction, when executed by the processor, causes the auxiliary control unit to aggregate the data received during a first time and group the data based on at least one of a type of the data, a destination, a domain, or any combination thereof.

17. The auxiliary control unit of claim 15, wherein the at least one instruction, when executed by the processor, causes the auxiliary control unit to aggregate the data received during a first time and group the data based on at least one of a type of the data, a destination, a domain, or any combination thereof.

18. The auxiliary control unit of claim 17, wherein the at least one instruction, when executed by the processor, causes the auxiliary control unit to:
group the data and generate a target jumbo frame to be transmitted to the target device;
identify a control period of the target device; and
transmit the target jumbo frame to the target device when the first time reaches the control period.

19. The auxiliary control unit of claim 15, further comprising
a plurality of zonal controllers,
wherein the at least one instruction, when executed by the processor, causes the auxiliary control unit to transmit the data to a second zonal controller corresponding to a characteristic of the data when a first zonal controller among the plurality of zonal controllers receives the data.

20. The auxiliary control unit of claim 19, wherein the at least one instruction, when executed by the processor, causes the auxiliary control unit to:
receive the data from at least one of the main control unit, the end device, or any combination thereof, based on a first communication speed through the first zonal controller; and
transmit the data from the first zonal controller to the second zonal controller based on a second communication speed higher than the first communication speed.
